# EUROPEAN PATENT APPLICATION

(11) **EP 4 573 881 A1**
(43) Date of publication of application: **25.06.2025**
(21) Application number: 24221981.4
(22) Date of filing: 20.12.2024
(51) Int. Cl.: A01D 61/02, A01D 75/18, B65G 23/44, A01D 41/14, A01D 47/00, A01D 61/00

(54) **DRAPER BELT TENSIONER SYSTEM**

(30) Priority: 21.12.2023 US 202363613110 P
(71) Applicant: Agco Corporation, Duluth, Georgia 30096 (US)
(72) Inventor: Kurkowski, Kye J., Hesston (US); Thompson, William H., Hesston (US)
(74) Representative: AGCO Intellectual Property Department

(57) **Abstract**

The present invention relates to a draper tensioner mechanism including a positioning control carriage (404) on which a draper roller (402) is mounted, the carriage being moveable with respect to a header frame (204) along a direction that is perpendicular to a rotational axis of the roller. The mechanism has a rockshaft (408) extending in a direction substantially parallel with the roller (402), a tensioning linkage (410) connecting the carriage (404) to the rockshaft (408), where the tensioning linkage has a pivot arm (412) having a proximal end connected to the rockshaft and a distal end connected to a first end of a positioning link (414) at pivot joint (416), and where a second end of the positioning link is connected to the carriage such that rotation of the rockshaft moves the pivot arm about an axis of the rockshaft so as to position the carriage.

## Description

### BACKGROUND OF THE INVENTION

### Field of Invention

This disclosure relates to draper headers for use with self-propelled crop-harvesting machines, and particularly to mechanisms for tensioning a draper belt on such draper headers.

### Description of Related Art

Self-propelled agricultural harvesters are well known and include, by way of example, combine harvesters, windrowers, and forage harvesters, all of which typically include a frame or chassis, an operator cab, an engine, and ground-engaging wheels or tracks. A cutting or pickup header is often carried by the harvester, the header typically being considerably wider than the harvester and mounted to the front side of a feederhouse.

Crop material collected by the header is conveyed into the feederhouse before being conveyed in a generally rearward direction to crop-processing apparatus. In the case of a combine harvester, the processing apparatus serves to thresh the crop material and separate grain therefrom, whereas, in the case of a forage harvester or windrower, the crop material is typically passed through conditioning rollers.

Agricultural equipment, such as combines, swathers and windrowers, typically include a header that is movably attached to the chassis of the vehicle. The header typically is located at the front of the vehicle and extends laterally relative to the vehicle's forward direction of travel. In some cases, the header is a single rigid body. In other cases, the header is a so-called multi-segment or articulated header comprising multiple sections that are movable relative to each other. For example, the header may have a center section located along the vehicle fore-aft centerline, and a wing section attached at, and extending laterally from, each lateral end of the center section. Devices such as hydraulic or pneumatic cylinders, mechanical linkages, and the like, may be provided to selectively control the heights of the center section and the wing sections.

A header typically includes conveyors to move crop materials from the lateral ends of the header towards the center of the header, and from the center of the header back towards the combine's threshing and separating system. In some cases, these conveyors comprise draper belts that are supported on rollers or the like. Typically, one roller is usually used to tension the draper belt to assist with maintaining alignment and effectively driving the belt. Tensioning system generally consists of springs or some other energy-holding device that maintains the tension on the belt as the belt stretches, but also provides relief if the belt suddenly needs it. For example, a tensioning roller might be located at one end of the belt and be mounted such that it is movable towards and away from an opposite roller to increase and decrease tension. The tensioning roller is attached to the header frame by one or more compression or tension springs, which are deformed to generate tension in the belt. In some cases, the spring compression is adjusted by rotating mounting screws that hold the springs to the frame.

Draper belts typically require occasional replacement, as well as periodic maintenance to adjust tension and tracking. It is also sometimes necessary to remove crop material that become trapped between the inner surface of the belt and the support rollers. To facilitate such service, the tension on the draper belt is released, such as by moving the rollers towards each other. Actions required to remove the tension in the belt can be time-consuming, and relatively difficult to accomplish. Such procedure can become even more difficult when the belt maintenance is performed in the field to open the belts to remove accumulated crop materials.

### SUMMARY OF THE INVENTION

In one aspect, the invention is directed to a harvesting header having an endless belt configured to form a closed loop to be routed around at least one roller a draper tensioner mechanism mounted to a header frame for releasing and reapplying tension on the endless belt. The draper tensioner mechanism includes a positioning control carriage on which the draper roller is mounted, the carriage being moveable with respect to the header frame along a direction that is perpendicular to a rotational axis of the roller. The draper tensioner mechanism includes a rockshaft extending in a direction substantially parallel with the roller. A tensioning linkage connects the carriage to the rockshaft, where the tensioning linkage has a pivot arm having a proximal end connected to the rockshaft and a distal end connected to a first end of a positioning link at a pivot joint. A second end of the positioning link is connected to the carriage such that rotation of the rockshaft moves the pivot arm about an axis of the rockshaft so as to position the carriage. A tensioning spring mounted on the carriage between a stop on the frame and an attachment mechanism on the carriage. The pivot arm rotates with the rockshaft to pull the carriage toward the rockshaft with the rotation of the rockshaft taking the pivot arm, and thus the carriage and connected tensioning spring, past a center position with maximum spring force and then onward to an over-center position so that the tensioning spring holds the carriage in place in a maintenance position.

This summary is provided to introduce concepts in simplified form that are further described below in the Detailed Description. This summary is not intended to identify key features or essential features of the disclosed or claimed subject matter and is not intended to describe each disclosed embodiment or every implementation of the disclosed or claimed subject matter. Specifically, features disclosed herein with respect to one embodiment may be equally applicable to another. Further, this summary is not intended to be used as an aid in determining the scope of the claimed subject matter. Many other novel advantages, features, and relationships will become apparent as this description proceeds. The figures and the description that follow more particularly exemplify illustrative embodiments.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a simplified front perspective view of an example combine harvester;
FIG. 2 illustrates a draper header that may be used with combine harvester of FIG. 1;
FIG. 3 illustrates a cutaway view of the draper header of FIG. 2 showing a draper tensioner mechanism for tensioning a draper belt on the header; and
FIG. 4 illustrates one end of the draper tensioner mechanism 304 of FIG. 4 with the draper tensioner mechanism positioning a roller in an operational position to tension the draper belt.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description. Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right" are used as a matter of mere convenience and are determined by standing at the rear of the machine facing in its normal direction of travel. Furthermore, the various components shown or described herein for any specific application of this invention can be varied or altered as anticipated by this invention and the practice of a specific application of any element may already by widely known or used in the art by persons skilled in the art and each will likewise not therefore be discussed in significant detail.

As used herein, the singular forms following "a," "an," and "the" are intended to include the plural forms as well, unless the context clearly indicates otherwise. As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded. As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," etc., is used for clarity and convenience in understanding the disclosure and accompanying drawings, and does not connote or depend on any specific preference or order, except where the context clearly indicates otherwise.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.). As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

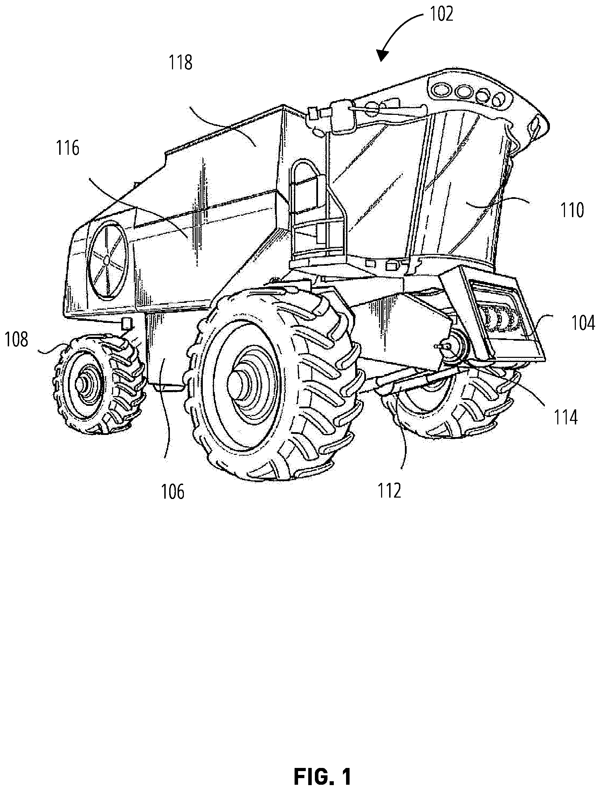

FIG. 1 illustrates an example agricultural harvester embodied as a combine harvester 102. In the context of the present disclosure, the example combine harvester 102 is merely illustrative, and other machines and/or implements with like functionality may deploy certain embodiments disclosed herein, such as forage harvesters, *etc.* The example combine harvester 102 is shown in FIG. 1 without a header attached and includes a feeder house 104 carried by a chassis 106 supported by wheels 108. An operator cab 110 is mounted to the chassis 106. In some embodiments, other or additional forms of travel may be used, such as tracks. Hydraulic cylinders 112 are shown affixed to the underside of the feeder house 104 on one end and to the chassis 106 on the other end. The feeder house 104 may move (*e.g.,* up, and down, pitch, tilt, *etc.*) based on actuation of the hydraulic cylinders 112, which causes a detachably coupled header to also be raised, lowered, pitched, and/or tilted. A rotating support shaft 114 may be configured to provide mechanical power to a header during operation of the combine harvester 102. The rotating support shaft 114 may be configured to operate at various speeds, as described in, for example, U.S. Patent 9,434,252, "Power Takeoff Drive System for a Vehicle," issued September 6, 2016.

In general, the combine harvester 102 cuts crop materials (e.g., using the header), and the cut crop materials are delivered to the front end of the feeder house 104. Such crop materials move upwardly and rearwardly within and beyond the feeder house 104 (e.g., by a conveyer) until reaching a processing system 116 that includes a thresher rotor. In one embodiment, the thresher rotor may comprise an axial-based, twin rotor, such as that found in a Fendt Ideal^{®} Combine by AGCO. Other designs may be used, such as a single, transverse rotor as found in a Gleaner^{®} Super Series Combine by AGCO. The thresher rotor processes the crop materials in known manner and passes a portion of the crop material (e.g., heavier chaff, corn stalks, etc.) toward the rear of the combine harvester 100 and another portion (e.g., grain and possibly light chaff) through a cleaning process. In the processing system 116, the crop materials undergo threshing and separating operations. In other words, the crop materials are threshed and separated by the thresher rotor operating in cooperation with well-known foraminous processing members in the form of threshing concave assemblies and separator grate assemblies, with the grain (and possibly light chaff) escaping through the concave assemblies and the grate assemblies and to a cleaning system beneath the processor to facilitate the cleaning of the heavier crop material. Bulkier stalk and leaf materials are generally retained by the concave assemblies and the grate assemblies and are discharged out from the processing system 116 and ultimately out of the rear of the combine harvester 102. The cleaned grain that drops to the bottom of the cleaning system is delivered by a conveying mechanism that transports the grain to an elevator, which conveys the grain to a grain bin 118 located at the top of the combine harvester 102. Any remaining chaff and partially or unthreshed grain is recirculated through the processing system 116 via a tailings return conveying mechanism. Because combine processing is known to those having ordinary skill in the art, further discussion thereof is omitted here for brevity.

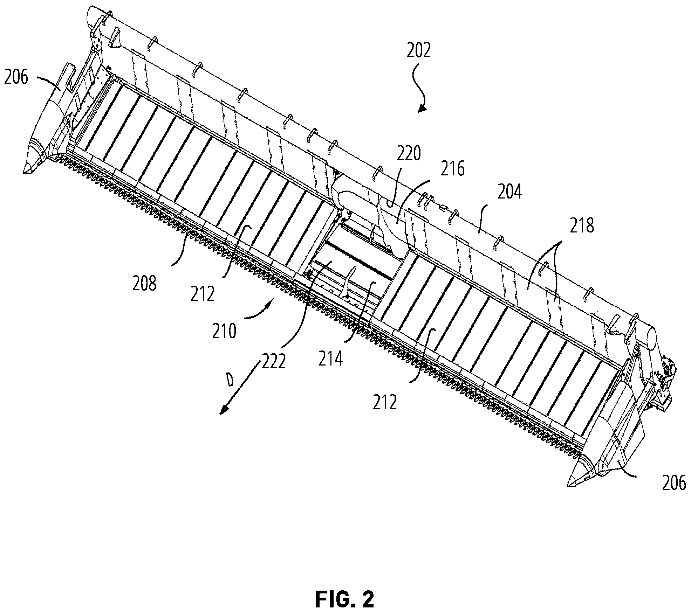

FIG. 2 is a simplified view of a header 202 that may be attached to the feeder house 104 of the combine harvester 102 (FIG. 1) and used to harvest a crop by being advanced in a generally forward direction D so that the crop can be fed to the feeder house 104 and further processed by the processing system 116. The header 202 may broadly include a header frame 204, side dividers 206, a cutterbar assembly 208, and a draper assembly 210 which may include side drapers 212 and a center draper 214. The header 202 may also include a central collecting auger 216 spaced rearwardly of the center draper 214 and a reel that extends the length of the header frame 204 and is configured to direct upstanding crop into the header 202. The header frame 204 may include upright rear panels 218 that cooperatively define an upright rear wall of the header 202, with a centrally located opening 220 being defined by the rear wall and serving as a crop passageway from the header 202 to the feeder house 104 of the combine harvester 102. The dividers 206 may serve to define boundaries between crop material being harvested and standing crop (typically, material to be harvested in a subsequent pass through the field) by directing crop material on one side of the divider 206 toward the cutterbar assembly 208 and crop material on the other side of the divider 206 away from the cutterbar assembly 208. The cutterbar assembly 208 is depicted as an oscillating blade but may be any other tool used for harvesting crops that come into contact with the cutterbar assembly 208.

Each of the side drapers 212 and the center draper 214 comprise a segmented or endless belt 222 on which harvested crop is carried toward the opening 220. As one skilled in the art will understand, the endless belt 222 forms a closed loop around at least two support rollers. At least one roller is moveably mounted relative to the frame 204. The second roller may be fixed to the frame 204, or it may also be movably mounted to the frame 204. The second roller also may be a drive roller that is powered by an electric or hydraulic motor or the like to move the endless belt 222. The first roller is configured to move toward and away from the second roller to adjust tension in the endless belt 222. Sufficient tension in the endless belt 222 is necessary so that the belt does not slip on the drive roller. Maintenance on the endless belt 222 is performed after releasing the tension in the belt, such as by moving the rollers towards each other. Headers are described in more detail in, for example, commonly assigned U.S. Patent 7,886,511 entitled "Draper Head with Flexible Cutterbar Having Rigid Center Section" issued February 15, 2011, and U.S. Patent 8,857,143 entitled "Frame for Harvesting Header with Continuous Section," issued October 14, 2014.

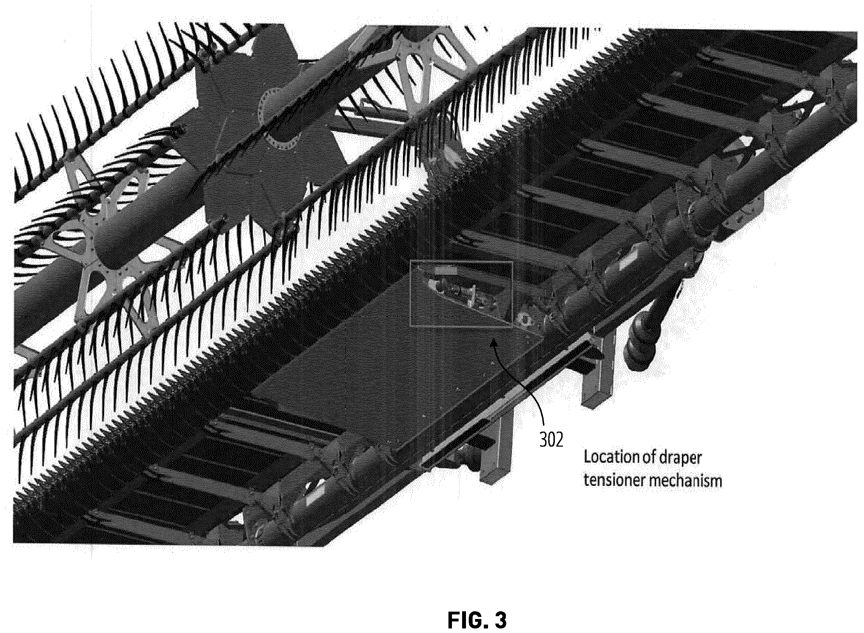

Turning now to FIG. 3, a quick release draper tensioner mechanism 302 for releasing and reapplying tension on the endless belt 222 is mounted to the header frame 204. The frame 204 on which the draper tensioner mechanism 302 is mounted may be any structural part of the header 202, such as the frame of a unitary header, or the frame portions of a center section or side section of a multi-segment header. In the illustrated example, the endless belt 222 on which the draper tensioner mechanism 302 controls tension is a center draper belt such as on the center draper 214 in FIG. 2. In other cases, the endless belt 222 may be a side draper belt such as on side draper 212 in FIG. 2

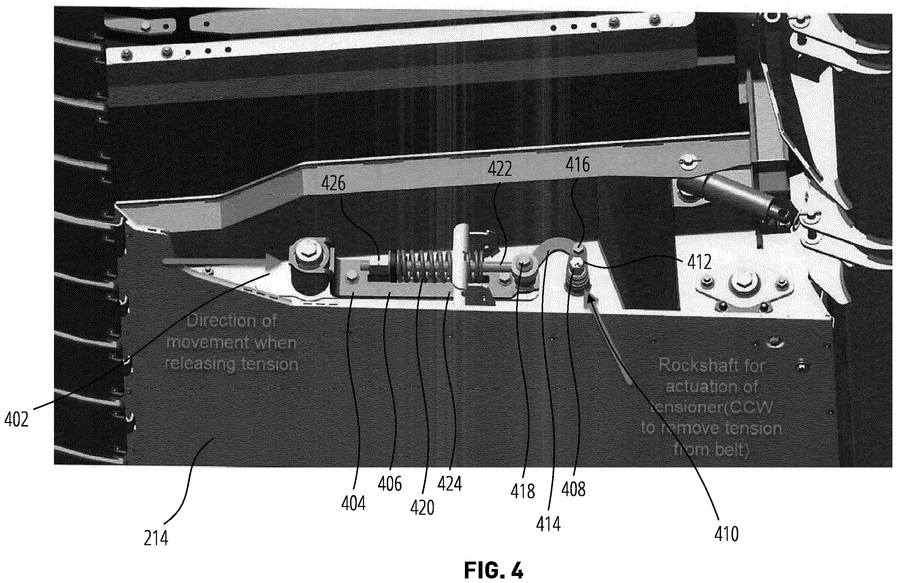

Turning also now to FIG. 4, the draper tensioner mechanism 302 includes a roller 402 mounted on a positioning control carriage 404. The roller 402 is located inside the closed loop of the endless belt 222 and extends from a first end at one side of the endless belt 222, to a second end at the other side of the endless belt 222. The roller 402 is rotatably mounted on carriage end members 406 of the carriage 404 such as with bearings or sliders at each end in the roller 402 using sound engineering judgment. Movement of the carriage 404 relative to the frame 204 along a direction that is perpendicular to a rotational axis of the roller 402 causes the roller 402 to adjust the tension on the endless belt 222. The draper tensioner mechanism 302 includes a rockshaft 408 extending in a direction substantially parallel with the roller 402. The roller carriage 404 is connected to the rockshaft 408 via tensioning linkages 410 at both ends of the carriage 404. The end view of FIG. 4 shows the carriage 404 and the control tensioning linkage 410 at one end of the endless belt 222 and carriage 404, and it is to be understood that the draper tensioner mechanism 302 may have substantially similar components at the other end of the carriage 404 and roller 402.

In the illustrated embodiment, the tensioning linkage 410 has a pivot arm 412 with a proximal end connected to the rockshaft 408. A distal end of the pivot arm 412 is connected to a first end of a positioning link 414 at pivot joint 416. The pivot joint 416 is offset from the rotational axis of the rockshaft 408 by a portion of a length of the pivot arm 412. A second end of the positioning link 414 is connected to the carriage 404 such as with suitable bolt fastener 418. A tensioning spring 420 is mounted on the carriage 404 supported on rod 422. The tensioning spring 420 is positioned between a stop 424 on the frame 204 and an attachment mechanism on the carriage 404. In the illustrated embodiment the attachment mechanism includes threaded bolts 426 on an end of the rod 422 also configured for finite adjustment of the force applied by the tensioning spring 420.

Rotation of the rockshaft 408 moves the pivot arm 412 about an axis of the rockshaft 408 so as to position the carriage 404. In FIG. 4, the rockshaft 408 is in an operational position in which the carriage 404 positions the roller 402 such that the endless belt 222 is held in a desired tension by the roller 402 carried on the carriage 404. The rockshaft 408 may be rotated clockwise such that the tensioning linkage 410 pulls the carriage 404 against the force of the tensioning spring 420 by compressing the tensioning spring 420. Such movement of the carriage 404 towards a maintenance position moves the roller 402 so as to release tension and loosen the endless belt 222.

In the illustrated example, the pivot arm 412 rotates with the rockshaft 408 and the shape of the positioning link 414 is such that as pivot joint 416 rotates, the carriage 404 is pulled toward the rockshaft 408 into the maintenance position. The design of the tensioning linkage 410 is such that rotation of the rockshaft 408 takes the pivot arm 412, and thus the carriage 404 and connected tensioning spring 420, past a point maximum spring force or center position, and then onward to an "over-center" position so that the tensioning spring 420 then holds the carriage 404 in place in the maintenance position without any outside force. Thus, the tensioning linkage 410 acts as an over-center toggle linkage that prevents the carriage 404 from moving from the maintenance position back to the operational position without first overcoming a force provided by the tensioning spring 420 necessary to move the pivot arm 412 from the maintenance position back through the center position. When the carriage 404 reaches the maintenance position, the belt tension is reduced to a magnitude that is less than in the operational positions, and the tension may be reduced to zero (i.e., the endless belt 222 may be slack). This reduction or removable of tension allows the operator to perform maintenance on the endless belt 222. For example, when the endless belt 222 is slack, the operator can easily remove and replace the endless belt 222, or perform other services such as clearing debris from inside the endless belt 222.

When returning the carriage 404 to the operational position, the rockshaft 408 must be rotated back counterclockwise to take the pivot arm 412 back through the center position. This motion is initially resisted by tensioning spring 420. However, once the operator applies sufficient force on the rockshaft 408 to rotate the pivot arm 412 beyond the center position, the tensioning spring 420 will pull the carriage 404 back towards the operational position.

In an alternate embodiment, the draper tensioner mechanism 302 may be configured to separately move the ends of the roller 402 to generate tension in the endless belt 222. For example, the draper tensioner mechanism 302 may have a first rockshaft 408 with the tensioning linkage 410 that connects carriage end member 406 to one end of the roller 402, and a second rockshaft 408 with the tensioning linkage 410 that connects the carriage end member 406 to the other end of the roller 402 so to allow separate operation of tensioning each end of the roller 402.

The foregoing has broadly outlined some of the more pertinent aspects and features of the present invention. These should be construed to be merely illustrative of some of the more prominent features and applications of the invention. Other beneficial results can be obtained by applying the disclosed information in a different manner or by modifying the disclosed embodiments. Accordingly, other aspects and a more comprehensive understanding of the invention may be obtained by referring to the detailed description of the exemplary embodiments taken in conjunction with the accompanying drawings.

## Claims

1. A harvesting header having an endless belt 222 configured to form a closed loop to be routed around at least one draper roller and a draper tensioner mechanism 302 mounted to a header frame 204 for releasing and reapplying tension on the endless belt 222, the draper tensioner mechanism comprising:
a positioning control carriage 404 on which the draper roller is mounted, the carriage being moveable with respect to the header frame 204 along a direction that is perpendicular to a rotational axis of the roller;
a rockshaft 408 extending in a direction parallel with the roller 402;
a tensioning linkage 410 connecting the carriage 404 to the rockshaft 408, wherein the tensioning linkage 410 has a pivot arm 412 having a proximal end connected to the rockshaft and a distal end connected to a first end of a positioning link 414 at pivot joint 416, and wherein a second end of the positioning link is connected to the carriage such that rotation of the rockshaft moves the pivot arm about an axis of the rockshaft so as to position the carriage;
a tensioning spring 420 mounted on the carriage 404 between a stop 424 on the frame and an attachment mechanism 422 on the carriage;
wherein the pivot arm rotates with the rockshaft to pull the carriage toward the rockshaft with rotation of the rockshaft taking the pivot arm, and thus the carriage and connected tensioning spring, past a center position with maximum spring force and then onward to an over-center position so that the tensioning spring holds the carriage in place in a maintenance position.

2. The harvesting header of claim 1 wherein the pivot joint is offset from the rotational axis of the rockshaft by a portion of a length of the pivot arm.

3. The harvesting header of any of claims 1 through 3 wherein the attachment mechanism includes threaded bolts 426 on an end of a rod 422 configured for finite adjustment of the force applied by the tensioning spring.

4. The harvesting header of claim 1 wherein the rockshaft has an operational position in which the carriage positions the roller such that the endless belt is held in a desired tension by the roller carried on the carriage, and wherein the rockshaft has a maintenance position in which the rockshaft may be rotated away from the operational position such that the tensioning linkage pulls the carriage against a force of the tensioning spring by compressing the tensioning spring to move the roller so as to release tension on the endless belt.

5. The harvesting header of claim 4 wherein the tensioning linkage acts as an over-center toggle linkage that prevents the carriage from moving from the maintenance position back to the operational position without first overcoming a force provided by the tensioning spring necessary to move the pivot arm from the maintenance position back through the center position.

6. The harvesting header of claim 4 wherein when returning the carriage to the operational position, the rockshaft is rotated back to take the pivot arm back through the center position.
